# EUROPÄISCHE PATENTSCHRIFT

(11) **EP 4 157 577 B1**
(45) Veröffentlichungstag und Bekanntmachung des Hinweises auf die Patenterteilung: **17.04.2024**
(21) Anmeldenummer: 21729886.8
(22) Anmeldetag: 01.06.2021
(51) Int. Cl.: B23K 9/095, B23K 15/02, B23K 26/03, B23K 26/21, B23K 31/12, B23K 26/14

(54) **SCHWEISSVERFAHREN**
WELDING METHOD
PROCÉDÉ DE SOUDURE

(30) Priorität: 02.06.2020 EP 20177795
(43) Veröffentlichungstag der Anmeldung: 05.04.2023
(73) Patentinhaber: FRONIUS INTERNATIONAL GmbH, 4643 Pettenbach (AT)
(72) Erfinder: BAUMANN, Willi, 4600 Wels-Thalheim (AT); WALDHÖR, Andreas, 4600 Wels-Thalheim (AT)
(74) Vertreter: Patentanwälte Pinter & Weiss OG
(86) Internationale Anmeldenummer: PCT/EP2021/064669
(87) Internationale Veröffentlichungsnummer: WO 2021/245077

(56) Entgegenhaltungen:
- EP-A2- 1 674 191
- WO-A1-2015/124870
- US-A- 4 742 207
- US-A1- 2011 042 361
- US-A1- 2014 326 507
- US-A1- 2019 093 828

## Beschreibung

Die Erfindung betrifft ein Schweißverfahren zum stoffschlüssigen Verbinden von zumindest zwei Bauteilen mittels zumindest eines Zusatzstoffs, wobei eine aus dem Zusatzstoff bestehende Schweißnaht mit einem vorgegebenen Nahtverlauf zwischen einem Nahtbeginn und einem Nahtende erzeugt wird, wobei die Erzeugung der Schweißnaht mittels zumindest einer Steuerungseinheit gesteuert wird, wobei durch zumindest einen Steuerungsparameter der Steuerungseinheit zumindest eine detektierbare äußeren physische Schweißnahteigenschaft der Schweißnaht beeinflusst wird.

Ein bekanntes Verfahren zur stoffschlüssigen Verbindung von Bauteilen ist das Schweißverfahren. Beim Schweißen von metallischen Bauteilen wird ein metallischer Schweißzusatz verwendet. Dabei werden der Schweißzusatz und auch die Bauteile unter Einbringung von Energie zumindest teilweise aufgeschmolzen und nach Abkühlung werden die Bauteile durch den Schweißzusatz stoffschlüssig verbunden.

Je nachdem, wie die Energie der Schweißstelle zugeführt wird, unterscheidet man verschiedene Schweißverfahren. Beim Lichtbogenschweißen wird z.B. elektrische Energie verwendet, um einen Lichtbogen zwischen einer Schweißelektrode und den zu verschweißenden Bauteilen zu erzeugen, der den Schweißzusatz und die Bauteile aufschmilzt. Dabei können abschmelzende Elektroden verwendet werden, welche selbst zugleich den Schweißzusatz bilden. Es können aber auch nicht-abschmelzende Elektroden verwendet werden, wobei der Schweißzusatz separat zugeführt wird. Beispielsweise sind diese Verfahren auch als MIG/MAG-Schweißverfahren bzw. WIG-Schweißverfahren bekannt, wobei meist ein aktives oder inertes Schutzgas verwendet wird, um die Schweißstelle vor Korrosion zu schützen. Die Schweißenergie kann aber auch mittels eines Lasers oder mittels eines Elektronenstrahls eingebracht werden, man spricht dann vom sogenannten Laserschweißen bzw. Elektronenstrahlschweißen. Auch Mischformen sind möglich, bei denen der Laser z.B. als zusätzliche Energiequelle verwendet wird.

Der Zusatzstoff wird dabei in Form einer Schweißnaht aufgebracht, die entlang eines bestimmten Nahtverlaufs erzeugt wird. Der Nahtverlauf ist im Wesentlichen durch die Bauteilgeometrie vorgegeben und kann sich z.B. von einem bestimmten Anfangspunkt bis zu einem bestimmten Endpunkt erstrecken.

Die genannten Schweißverfahren können grundsätzlich manuell erfolgen, indem z.B. ein Schweißbrenner von einer Person manuell relativ zum Werkstück bewegt wird. Um möglichst gleichbleibende und reproduzierbare Ergebnisse bei der Erzeugung einer Schweißnaht zu erreichen wird die Schweißnaht aber vorzugsweise automatisiert mit einer geeigneten Vorrichtung erzeugt. Die Vorrichtung umfasst dabei zumindest eine Manipulationseinheit und eine Schweißeinheit, die von der Manipulationseinheit bewegt wird. Beispielsweise kann eine Manipulationseinheit vorgesehen sein, mit der ein (oder mehrere) Schweißeinheiten zumindest eindimensional relativ zu den zu verbindenden Bauteilen bewegt werden kann.

Um komplexere mehrdimensionale Nahtverläufe erzeugen zu können, ist vorzugsweise ein mehrachsiger Roboter als Manipulationseinheit vorgesehen. Bei Schweißverfahren wird beispielsweise oftmals ein Schweißroboter verwendet, der einen (oder mehrere) Schweißbrenner führt. Je nach verwendetem Schweißverfahren können der (oder die) Zusatzstoff(e) direkt mittels der Schweißeinheit der Schweißstelle zugeführt werden oder auch mittels einer separaten Zuführeinheit. Beim bekannten MIG/MAG-Schweißen wird der Zusatzstoff z.B. integral im Schweißbrenner in Form eines abschmelzenden Schweißdrahts der Schweißstelle zugeführt. Beim WIG-Schweißen hingegen ist eine separate Zuführeinheit vorgesehen, mit der der Schweißzusatz mit einer bestimmten einstellbaren, insbesondere regelbaren Vorschubgeschwindigkeit der Schweißstelle zuführbar ist.

Die Vorrichtung weist auch zumindest eine Steuerungseinheit auf, mit der das Schweißverfahren gesteuert werden kann. Natürlich können auch mehrere Steuerungseinheiten vorgesehen sein, die in geeigneter Weise miteinander kommunizieren, z.B. eine Steuerungseinheit der Schweißeinheit und eine Steuerungseinheit der Manipulationseinheit. In der oder den Steuerungseinheiten sind bestimmte Steuerungsparameter entweder fix implementiert oder einstellbar, mit denen bestimmte Eigenschaften der Schweißnaht beeinflusst werden können. Solche Steuerungsparameter können z.B. eine Vorschubgeschwindigkeit des Zusatzstoffs in Richtung der zu verbindenden Bauteile sein, eine Nahterzeugungsgeschwindigkeit der Schweißeinheit relativ zu den Bauteilen, Temperaturen, Drücke, elektrische Spannungen und Ströme, usw. Bei Lichtbogen-Schweißverfahren wie z.B. dem MIG/MAG-Schweißen können in der Regel verschiedene Schweißprozesse zur Anwendung kommen, die unterschiedliche Schweißparameter als Steuerungsparameter aufweisen. Dazu zählen z.B. ein Schweißstrom, eine Schweißspannung, eine Schweißdrahtvorschubgeschwindigkeit, eine Impulsfrequenz des Schweißstroms (beim Impulsschweißprozess), eine Phasenverschiebung der Schweißströme mehrerer Schweißbrenner (beim Mehrfachschweißprozess), etc.

Durch die Wahl der Schweißparameter kann beispielsweise eine Geometrie der Schweißnaht beeinflusst werden, z.B. eine Schweißschuppenbreite, eine Schweißschuppendicke oder eine Schweißschuppenlänge der Schweißschuppen, aus welchen die Schweißnaht besteht. Durch die Wahl der Schweißparameter bzw. allgemein der Steuerungsparameter können bestimmte Schweißnahteigenschaften der Schweißnaht beeinflusst werden, z.B. die Festigkeit der Schweißnaht. Das bedeutet, dass z.B. je nach Geometrie, Werkstoff der Bauteile und den im geplanten Anwendungsgebiet zu erwartenden Randbedingungen (z.B. mechanische und/oder thermische Beanspruchung, Sicherheitsrisiko für Menschen, Lebensdauer, etc.) unterschiedliche Steuerungsparameter verwendet werden können, um eine Schweißnaht mit den gewünschten Eigenschaften zu erzeugen. Insbesondere bei sicherheitsrelevanten Schweißnähten, wie z.B. beim Schweißen von Schiffsrümpfen, tragenden Bauteilen von Maschinen oder Bauwerken, etc., ist oftmals eine wiederkehrende Überprüfung der Schweißnaht erforderlich bzw. auch aus rechtlichen Gründen vorgeschrieben. Dabei kommen oftmals zerstörungsfreie Prüfmethoden zur Anwendung, wie z.B. visuelle Inspektion, Ultraschallprüfung. Je nach Sorgfalt der Aufzeichnung von Daten während und nach der Erzeugung der Schweißnaht hat die prüfende Person dabei in der Regel keine oder nur mangelhafte Informationen über die Schweißnaht. Insbesondere die bei der Erzeugung einer Schweißnaht verwendeten Steuerungsparameter, die eine wichtige Informationsquelle für die Beurteilung der Qualität einer Schweißnaht darstellen können, sind in der Regel bei der Prüfung nicht mehr oder nur eingeschränkt verfügbar. Wenn überhaupt liegen solche Informationen meist in Papierform oder in gespeicherter Form auf einem Computer beim Ausführer der Schweißnaht vor, nicht jedoch bei Prüfen der Schweißnaht. Solche Daten während der Prüfung der Schweißnaht zur Verfügung zu stellen ist daher meist aufwändig oder gar nicht bzw. nur eingeschränkt möglich.

Die US 2014/326507 A1 offenbart ein Verfahren zum Einbringen eines Identifikations-Codes an einer Außenfläche eines Bohrers für die Erdölförderung. Der Code wird in Form einer Auftragsschweißnaht mit Punkt-Strich Kombinationen an der Umfangsfläche des Bohrers eingebracht, sodass dass diese mit geeigneten Sensoren detektiert werden kann. US 2011/042361 A1 (Basis für den Oberbegriff des Anspruchs 1) offenbart ein Schweißverfahren zum stoffschlüssigen Verbinden von zwei Bauteilen mittels eines Zusatzstoffs, wobei die Erzeugung der Schweißnaht mittels zumindest einer Steuerungseinheit gesteuert wird, wobei durch zumindest einen Steuerungsparameter der Steuerungseinheit eine detektierbare äußere physische Schweißnahteigenschaft der Schweißnaht beeinflusst wird, sodass ein Steppnaht entsteht.

Es ist deshalb die Aufgabe der Erfindung, ein Schweißverfahren bereitzustellen, das eine einfache und langfristige Verfügbarkeit von Informationen über das zur Erzeugung einer Schweißnaht durchgeführte Schweißverfahren ermöglicht.

Die Aufgabe wird erfindungsgemäß dadurch gelöst, dass in dem zumindest einen Steuerungsparameter eine Information berücksichtigt wird, die während der Erzeugung der Schweißnaht zwischen einem Informationsstartpunkt und einem Informationsendpunkt im Nahtverlauf mittels der zumindest einen detektierbaren äußeren physischen Schweißnahteigenschaft in der Schweißnaht gespeichert wird, sodass die Information aus einer Sequenz der zumindest einen detektierbaren äußeren physischen Schweißnahteigenschaft entlang des Nahtverlaufs im Bereich zwischen dem Informationsstartpunkt und dem Informationsendpunkt, vorzugsweise optisch und/oder haptisch, auslesbar ist. Dadurch können bestimmte gewünschte Informationen in der Schweißnaht nachhaltig hinterlegt werden, sodass die Informationen zu einem beliebigen späteren Zeitpunkt nach der Erzeugung der Schweißnaht direkt aus der Schweißnaht ausgelesen werden können. Dadurch kann in einfacher Weise verhindert werden, dass Informationen verloren gehen, beispielsweise weil diese bei der Durchführung des Schweißverfahrens nicht ausreichend dokumentiert wurden. Unter Berücksichtigen ist im Rahmen der Erfindung im Wesentlichen zu verstehen, dass die zu speichernde Information derart in die Steuerungsparameter einbezogen bzw. integriert wird, sodass sich die Information in der erzeugten Schweißnaht in Form einer Sequenz widerspiegelt. Unter Speichern ist im Rahmen der Erfindung im Wesentlichen ein irreversibles einlagern bzw. einprägen der Information in die erzeugte Schweißnaht zu verstehen. Unter der Sequenz ist im Rahmen der Erfindung im Wesentlichen eine charakteristische Abfolge von aufeinanderfolgenden detektierbaren äußeren physischen Schweißnahteigenschaften entlang des Nahtverlaufs zu verstehen, aus der die gespeicherte Information eindeutig und reproduzierbar gewonnen werden kann.

Gemäß der Erfindung wird während der Erzeugung der Schweißnaht der zumindest eine Steuerungsparameter variiert, um im Nahtverlauf zwischen dem Informationsstartpunkt und dem Informationsendpunkt die zumindest eine detektierbare äußere physische Schweißnahteigenschaft zu verändern, wobei unterschiedliche Ausprägungen der zumindest einen äußeren physischen Schweißnahteigenschaft Codebuchstaben eines Codealphabets zugeordnet werden und die Information als Kombination der Codebuchstaben des Codealphabets gespeichert wird. Dadurch wird eine einfache Möglichkeit der Speicherung geschaffen.

In vorteilhafter Weise kann die Information in Form eines maschinenlesbaren digitalen Codes gespeichert werden, sodass die Information mittels einer Ausleseeinheit aus der Sequenz der zumindest einen detektierbaren äußeren physischen Schweißnahteigenschaft auslesbar ist, vorzugsweise mittels eines berührungslosen Scanners, zumindest einer Kamera oder eines Messtasters, wobei als digitaler Code vorzugsweise ein mehrwertiger Code, besonders bevorzugt ein Binärcode oder Ternärcode verwendet wird. Dadurch kann die Information in einfacher Weise manuell oder automatisiert ausgelesen werden.

Gemäß einer vorteilhaften Ausführungsform wird als die zumindest eine detektierbare äußere physische Schweißnahteigenschaft ein messbarer Geometrieparameter der Schweißnaht verwendet, vorzugsweise eine Schweißnahtdicke, eine Schweißnahtbreite, oder eine Schweißnahtlänge von Abschnitten der Schweißnaht, insbesondere eine Schweißschuppenlänge von Schweißschuppen oder eine Länge eines Bereichs der Schweißnaht ohne Zusatzstoff. Dadurch können einfach messbare Größen verwendet werden, wodurch das Auslesen der Information erleichtert wird.

Die Information beinhaltet vorzugsweise Verfahrensdaten zu den verwendeten Steuerungsparametern des Schweißverfahrens, die zur Erzeugung der Schweißnaht verwendet werden oder eine den Verfahrensdaten zugeordnete Referenzinformation. Die Information kann aber auch vom Schweißverfahren unabhängige externe Daten beinhalten oder eine den externen Daten zugeordnete Referenzinformation. Dadurch können Informationen gespeichert werden, die direkt den Schweißprozess betreffen, der für die Erzeugung der Schweißnaht verwendet wurde. Alternativ oder zusätzlich können auch andere interessante Daten gespeichert werden, welche nicht unmittelbar den Schweißprozess betreffen, aber trotzdem eine wichtige Informationsquelle darstellen, z.B. Daten zu Bauteilen, Datum und Uhrzeit der Herstellung der Schweißnaht, etc. Durch die Speicherung einer Referenzinformation kann eine geringere Datenmenge in der Schweißnaht gespeichert werden und die eigentliche interessante Information kann über die zugeordnete Referenzinformation z.B. aus einer externen Datenquelle abgerufen werden.

Es kann vorteilhaft sein, wenn die Verfahrensdaten Daten über verwendete Schweißparameter beinhalten, die zur Erzeugung der Schweißnaht verwendet werden, vorzugsweise Daten über einen Schweißstrom und/oder eine Schweißspannung und/oder eine Vorschubgeschwindigkeit des Zusatzstoffs und/oder eine Impulsfrequenz eines Schweißstroms und/oder eine Anzahl von Schweißzyklen und/oder eine Dauer von Schweißzyklen. Dadurch können in einfacher Weise die konkret verwendeten Schweißparameter gespeichert werden und später wieder aus der Schweißnaht ausgelesen werden, beispielsweise im Rahmen einer Qualitätsüberprüfung.

Es ist vorteilhaft, wenn die Information in der Steuerungseinheit gespeichert wird und/oder vor der Durchführung des Schweißverfahrens an die Steuerungseinheit übertragen wird und/oder mittels einer Eingabeeinheit an die Steuerungseinheit übermittelt wird und/oder dass die Information von der Steuerungseinheit in einen digitalen Code umgewandelt wird. Durch die Speicherung kann die Information erneut verwendet werden oder es kann z.B. später nachvollzogen werden, wann und welche Information gespeichert wurde. Über eine Eingabeeinheit könnte beispielsweise eine zu speichernde Information manuell eingegeben werden. Wenn die Information z.B. auf einer externen Einheit vorliegt, kann diese in einfacher Weise an die Steuerungseinheit übertragen werden. Die Umwandlung kann vorteilhaft sein, um eine Information in einen bestimmten digitalen Code umzuwandeln, in dem sie in der Schweißnaht gespeichert wird.

Als Schweißverfahren wird vorzugsweise ein Lichtbogenschweißverfahren mit abschmelzender oder nicht-abschmelzender Elektrode, ein Laserschweißverfahren oder ein Elektronenstrahlschweißverfahren verwendet. Dadurch können bekannte Schweißverfahren verwendet werden.

Vorzugsweise kann auf zumindest einem der Bauteile durch Auftragsschweißen auch eine Markierungsschweißnaht erzeugt werden, wobei in dem zumindest einen Steuerungsparameter eine Information berücksichtigt wird, die während der Erzeugung der Markierungsschweißnaht zwischen einem Informationsstartpunkt und einem Informationsendpunkt im Nahtverlauf mittels der zumindest einen detektierbaren äußeren physischen Schweißnahteigenschaft in der Markierungsschweißnaht gespeichert wird, sodass die Information aus einer Sequenz der zumindest einen detektierbaren äußeren physischen Schweißnahteigenschaft entlang des Nahtverlaufs im Bereich zwischen dem Informationsstartpunkt und dem Informationsendpunkt, vorzugsweise optisch und/oder haptisch, auslesbar ist. Dadurch kann zusätzlich zur Verbindungsschweißnaht eine Markierungsschweißnaht auf der Oberfläche eines Bauteils erzeugt werden, welche lediglich zur Speicherung der Information und nicht zum Verbinden der Bauteile dient.

Es kann auch vorteilhaft sein, wenn in der Schweißnaht ein, nicht der stoffschlüssigen Verbindung dienender Markierungsnahtabschnitt vorgesehen wird, wobei in dem zumindest einen Steuerungsparameter eine Information berücksichtigt wird, die während der Erzeugung des Markierungsnahtabschnitts der Schweißnaht zwischen einem Informationsstartpunkt und einem Informationsendpunkt im Nahtverlauf des Markierungsnahtabschnitts mittels der zumindest einen detektierbaren äußeren physischen Schweißnahteigenschaft in der Schweißnaht gespeichert wird, sodass die Information aus einer Sequenz der zumindest einen detektierbaren äußeren physischen Schweißnahteigenschaft entlang des Nahtverlaufs im Bereich zwischen dem Informationsstartpunkt und dem Informationsendpunkt, vorzugsweise optisch und/oder haptisch, auslesbar ist. Dadurch können in der Verbindungsschweißnaht Abschnitte integriert werden, welche lediglich der Speicherung der Information dienen und nicht der stoffschlüssigen Verbindung der Bauteile.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt
Fig.1 eine Vorrichtung zur Durchführung eines Schweißverfahrens in Form einer Schweißvorrichtung,
Fig.2 mehrere mittels jeweils einer Schweißnaht verbundene Bauteile sowie eine Ausleseeinheit zum Auslesen von digitalen Informationen aus der Schweißnaht.

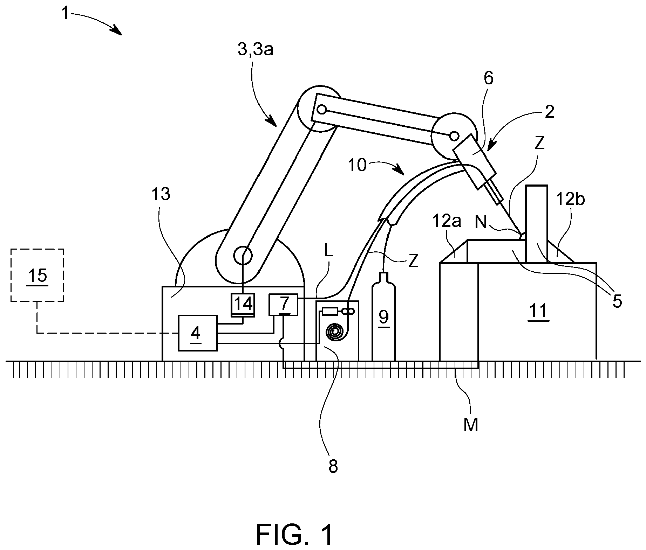

In Fig.1 ist eine Vorrichtung 1 zur Durchführung des erfindungsgemäßen Schweißverfahrens dargestellt. Die Vorrichtung 1 ist dazu vorgesehen, zumindest zwei Bauteile 5 mittels zumindest eines Zusatzstoffs Z stoffschlüssig miteinander zu verbinden. Die Vorrichtung 1 weist zumindest eine Schweißeinheit 2 zur Erzeugung einer aus dem Zusatzstoff Z bestehenden Schweißnaht N, eine Manipulationseinheit 3 zur Bewegung eines Schweißbrenners 6 der Schweißeinheit 2 entlang eines vorgegebenen Nahtverlaufs und eine Steuerungseinheit 4 zur Steuerung der Vorrichtung 1 auf. Als Zusatzstoff Z wird in der Regel ein geeigneter metallischer Schweißzusatz verwendet. Der Schweißzusatz kann entweder integral mit dem Schweißbrenner 6 der Schweißstelle zugeführt werden, wie z.B. beim bekannten MSG-Schweißverfahren, könnte aber auch separat der Schweißstelle zugeführt werden, z.B. mit einer separaten Zuführeinheit, wie beim bekannten WIG-Schweißverfahren. Die Zuführeinheit wird dann natürlich vorzugsweise synchron mit dem Schweißbrenner 6 von der Manipulationseinheit 3 bewegt. Der Nahtverlauf der Schweißnaht N ergibt sich im Wesentlichen aus der Geometrie der zu verbindenden Bauteile 5 und kann von einer einfachen Geraden bis hin zu komplexen dreidimensionalen Verläufen reichen.

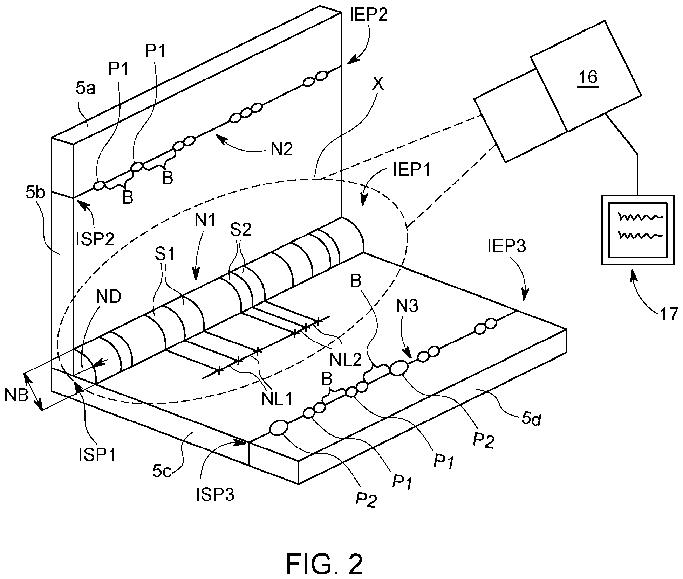

Im gezeigten Beispiel sind zwei einfache plattenförmige Bauteile 5 dargestellt, die in einem Winkel von ca. 90 Grad zueinander angeordnet sind und mit einer Schweißnaht N in Form einer bekannten Kehlnaht stoffschlüssig verbunden werden. Daraus ergibt sich ein Nahtverlauf in Form einer Geraden, hier in Richtung normal auf die Zeichenebene. Natürlich ist dies aber nur beispielhaft zu verstehen. Wenn beispielsweise ein zylindrisches Bauteil und ein Bauteil mit einer ebenen Fläche verbunden werden, dann kann der Nahtverlauf z.B. einen kreisrunden Verlauf aufweisen. Die Schweißnaht N muss dabei auch nicht zwingend kontinuierlich, also ohne Unterbrechung verlaufen, sondern es wäre grundsätzlich auch eine intermittierende Schweißnaht N möglich, bei der entlang des Nahtverlaufs abschnittsweise kein Zusatzstoff Z aufgetragen wird. Eine intermittierende Schweißnaht N kann beispielsweise durch sogenanntes Intervallschweißen erzeugt werden, wie anhand Fig.2 noch näher beschrieben wird. Im Rahmen der Erfindung ist unter einer Schweißnaht N daher nicht zwingend eine zusammenhängende Naht zu verstehen, sondern auch eine unterbrochene oder teilweise unterbrochene Naht.

Die Bauteile 5 werden vorzugsweise vor Beginn des Schweißverfahrens in der gewünschten Position relativ zueinander positioniert und fixiert. Dies kann beispielsweise mit einer geeigneten Spanneinrichtung oder einer anderen geeigneten Positioniereinrichtung erfolgen. Im dargestellten Beispiel sind die Bauteile 5 auf einem Gestell 11 angeordnet und mittels Spannelementen 12a, 12b einer Spannvorrichtung fixiert. Das ist aber natürlich nur beispielhaft und es wäre auch jede andere Art der relativen Positionierung möglich.

Zur Erzeugung der Schweißnaht N wird der Schweißbrenner 6 von der Manipulationseinheit 3 bewegt. Je nach dem geplanten Nahtverlauf der Schweißnaht N kann eine geeignete Manipulationseinheit 3 verwendet werden, mit der der Schweißbrenner 6 (und ggf. die Zuführeinheit) mit den erforderlichen Bewegungsfreiheitsgraden bewegt werden kann. Für die Schweißnaht N des dargestellten Beispiels mit geradem Nahtverlauf wäre grundsätzlich ein translatorischer Bewegungsfreiheitsgrad ausreichend. Um verschiedene und insbesondere auch komplexere, mehrdimensionale Nahtverläufe realisieren zu können ist es aber vorteilhaft, wenn die Manipulationseinheit 3 mehr als nur einen translatorischen Bewegungsfreiheitsgrad aufweist. In Fig.1 ist schematisch und lediglich beispielhaft ein bekannter mehrachsiger Industrieroboter 3a dargestellt, der auf einem Gestell 13 angeordnet ist. Natürlich wären aber auch beliebige andere geeignete Manipulationseinheiten 3 möglich. Im Gestell 13 ist auch eine Antriebseinheit 14 zum Antrieb der Manipulationseinheit 3 vorgesehen, die von der Steuerungseinheit 4 ansteuerbar ist, um einen gewünschten Bewegungsablauf durchzuführen.

Die Steuerungseinheit 4 (z.B. als Hardware und/oder Software ausgeführt) ist hier beispielhaft ebenfalls im Gestell 13 integriert, könnte aber natürlich auch an einer beliebigen anderen Stelle angeordnet sein. Über die Steuerungseinheit 4 können sowohl die Manipulationseinheit 3, als auch die Schweißeinheit 2 gesteuert werden. Natürlich könnten auch mehrere Steuerungseinheiten in der Vorrichtung 1 vorgesehen sein, die miteinander kommunizieren, z.B. (zumindest) eine eigene Steuerungseinheit für die Manipulationseinheit 3 und (zumindest) eine eigene Steuerungseinheit für die Schweißeinheit 2. Die Steuerungseinheit 4 und/oder die separaten Steuerungseinheiten könnten dann beispielsweise mit einer übergeordneten Steuerungseinheit 15 verbunden sein, wie in Fig.1 gestrichelt angedeutet ist. Dadurch könnte die z.B. auch mehrere erfindungsgemäße Vorrichtungen 1 und/oder andere Anlagen zentral gesteuert werden und miteinander synchronisiert werden. Dies kann beispielsweise in komplexeren Produktionsprozessen vorteilhaft sein, bei welchen z.B. mit mehreren Vorrichtungen gleichzeitig an einem Werkstück gearbeitet wird, wie z.B. beim Schweißen von Fahrzeug-Karosserien o.ä. Solche übergeordneten Steuerungseinheiten sind aus dem Stand der Technik hinreichend bekannt, daher wird an dieser Stelle darauf nicht näher eingegangen.

Durch Veränderung zumindest eines Steuerungsparameters der Steuerungseinheit 4 der Vorrichtung 1 kann zumindest eine detektierbare äußere physische Schweißnahteigenschaft der Schweißnaht N beeinflusst werden. Unter einer detektierbaren äußeren physischen Schweißnahteigenschaft ist im Rahmen der Erfindung eine Eigenschaft der Schweißnaht N zu verstehen, welche die äußere körperliche Beschaffenheit der Schweißnaht N betrifft, also eine Eigenschaft, die von außen erkennbar bzw. detektierbar ist. Das kann z.B. ein qualitatives Merkmal der Schweißnaht N sein, das optisch oder haptisch erkennbar ist, wie z.B. das abschnittsweise Vorhandensein (oder Nicht-Vorhandensein) des Zusatzstoffs Z entlang des Nahtverlaufs der Schweißnaht N. Bei einer intermittierenden Schweißnaht (z.B. Schweißnaht N2 in Fig.2) könnte z.B. ein Schweißpunkt P1 und/oder ein Bereich B zwischen den Schweißpunkten P1 eine detektierbare äußere physische Schweißnahteigenschaft sein, wie Fig.2 anhand der zweiten und dritten Schweißnaht N2, N3 gargestellt ist.

Eine detektierbare äußere physische Schweißnahteigenschaft kann aber beispielsweise auch ein quantitativ messbarer Geometrieparameter der Schweißnaht N sein, wie z.B. eine Schweißnahtdicke ND, Schweißnahtbreite NB oder eine Schweißnahtlänge NL von bestimmten Abschnitten der Schweißnaht N. Bei einer ununterbrochenen Schweißnaht N kann der Abschnitt der Schweißnaht N beispielsweise eine Schweißschuppe Si sein, die die Schweißnaht N ausbilden. Die Schweißnahtlänge NL kann hierbei eine Schweißschuppenlänge NLi der Schweißschuppen Si sein, wie in Fig. 2 anhand der ersten Schweißnaht N1 dargestellt ist. Bei einer unterbrochenen Schweißnaht N kann der Abschnitt z.B. ein Schweißpunkt Pi sein und die Schweißnahtlänge NL könnte eine Schweißpunktlänge der Schweißpunkte Pi sein. Auch eine Länge eines Bereichs B ohne Zusatzstoff Z könnte beispielsweise als messbarer Geometrieparameter verwendet werden. Natürlich könnten ein oder mehrere bestimmte detektierbare äußere physische Schweißnahteigenschaft auch durch mehrere Steuerungsparameter beeinflusst werden.

Ein Steuerungsparameter der Steuerungseinheit 4 kann z.B. eine Bewegungsgeschwindigkeit der Manipulationseinheit 3 sein, mit der der Schweißbrenner 6 relativ zu den Bauteilen 5 bewegt wird. Ein Steuerungsparameter kann aber auch ein Schweißparameter der Schweißeinheit 2 sein. Unter einem Steuerungsparameter kann aber natürlich auch jeweils eine äquivalente Größe verstanden werden. Üblicherweise können an einer Schweißeinheit 2 eine Mehrzahl von Schweißparametern eingestellt werden, die für einen bestimmten Schweißprozess verwendet werden, wie z.B. eine Vorschubgeschwindigkeit des Zusatzstoffs Z (in Richtung der zu verbindenden Bauteile 5), ein Schweißstrom, eine Schweißspannung, eine Impulsfrequenz des Schweißstromes, etc. Beispielsweise können Steuerungsprogramme mit festgelegten oder festlegbaren Steuerungsparametern in der Steuerungseinheit 4 hinterlegt sein, die von einem Benutzer der Vorrichtung 1 ausgewählt werden können, um eine Schweißnaht N mit einer oder mehrerer bestimmter detektierbarer äußere physischer Schweißnahteigenschaften zu erzeugen. Beispielsweise können auch ein gewünschter Nahtbeginn und ein gewünschtes Nahtende sowie ein dazwischenliegender gewünschter Nahtverlauf der zu erzeugenden Schweißnaht N vorgegeben werden. Die Steuerungseinheit 4 steuert den Schweißbrenner 6 und die Manipulationseinheit 3 entsprechend mit den vorgegebenen Einstellungen mit bestimmten Steuerungsparameter an, um die Schweißnaht N automatisiert zu erzeugen.

Gemäß der Erfindung kann in zumindest einem Steuerungsparameter der Steuerungseinheit 4 eine Information berücksichtigt werden, die von der der Steuerungseinheit 4 verarbeitet wird und die von der Steuerungseinheit 4 bei der Steuerung Vorrichtung 1, insbesondere bei der Steuerung des Schweißbrenners 6 und/oder der Manipulationseinheit 3 berücksichtigt wird. Die Steuerungseinheit 4 verarbeitet und berücksichtigt die Information derart, dass die Informationen während der Erzeugung der Schweißnaht N zwischen einem bestimmten Informationsstartpunkt ISP und einem bestimmten Informationsendpunkt IEP im Nahtverlauf mittels zumindest einer äußeren physischen Schweißnahteigenschaft in der Schweißnaht N gespeichert wird. Die Information kann beispielsweise eine numerische Information in Form von Zahlenwerten sein, wie beispielsweise ein Wert eines Schweißparameters, wie z.B. des Schweißstroms oder der Schweißspannung, eine Schweißprogrammnummer als Referenzinformation für ein bestimmtes Schweißprogramm, eine bestimmten Schweißprozess zugeordnete Schweißprozessnummer oder auch andere relevante Einstellwerte und Referenzwerte, wie z.B. Prüfsummen, numerische Signaturen, etc. Die Information kann aber beispielsweise auch eine alphabetische Information (in Form von Buchstaben oder ganzen Wörtern, z.B. Bauteilnummer, etc.) oder alphanumerische Information (Mischung aus Zahlenwerten und Buchstaben, z.B. ein bestimmte Seriennummer oder ein Produktcode, etc.) sein. Die Information ist derart in der Schweißnaht N speicherbar, dass sie aus einer Sequenz der zumindest einen detektierbaren äußeren physischen Schweißnahteigenschaft entlang des Nahtverlaufs im Bereich zwischen dem Informationsstartpunkt ISP und dem Informationsendpunkt IEP ausgelesen werden kann. Die Speicherung erfolgt dabei vorzugsweise so, dass das Auslesen optisch und/oder haptisch erfolgen kann.

Gemäß der Erfindung wird der zumindest eine Steuerungsparameter während der Erzeugung der Schweißnaht N variiert werden, um im Nahtverlauf zwischen dem Informationsstartpunkt ISP und dem Informationsendpunkt IEP die zumindest eine detektierbare äußeren physische Schweißnahteigenschaft zu verändern. Dabei werden unterschiedlichen Ausprägungen dieser einen äußeren physischen Schweißnahteigenschaft Codebuchstaben eines Codealphabets zugeordnet und die Information wird als Kombination der Codebuchstaben des Codealphabets in der Schweißnaht N gespeichert. Jeder Code hat dabei ein festgelegtes Codealphabet mit einer bestimmten Anzahl von Codebuchstaben oder Codesymbolen. Jeder Buchstabe (z.B. A, B, C usw.) und jede Zahl (z.B. 1, 2, 3, usw.) der zu speichernden Information und folglich jedes zu speichernde Informationswort (z.B. STROM) oder jede zu speichernde Informationszahl (z.B. 123) wird durch eine Kombination der Buchstaben des Codealphabets gebildet.

Beispielsweise kann ein Geometrieparameter wie z.B. die Schweißschuppenlänge NLi der Schweißschuppen als detektierbare äußeren physische Schweißnahteigenschaft verwendet werden. Die unterschiedlichen Ausprägungen der äußeren physischen Schweißnahteigenschaft wären dabei verschiedene Schweißschuppenlängen NLi von Schweißschuppen Si (siehe Fig.2). Die Schweißschuppenlängen NLi der Schweißschuppen Si können durch die Variation eines (oder mehrerer) Steuerungsparameter in der Steuerungseinheit 4 beeinflusst werden. Die Schweißeinheit 2 kann beispielsweise auch eine separate (nicht dargestellte) Schweiß-Steuerungseinheit zur Steuerung des Schweißprozesses aufweisen, die von der Steuerungseinheit 4 (oder der übergeordneten Steuerungseinheit 15) angesteuert wird. Zum Einbringen der Informationen in die Schweißnaht N kann es dabei beispielsweise ausreichend sein, wenn die zu speichernde Information ausschließlich in den Steuerungsparametern der Schweiß-Steuerungseinheit berücksichtig wird. Beispielsweise könnten ein oder mehrere Steuerungsparameter der Schweiß-Steuerungseinheit variiert werden, um z.B. Schweißschuppen Si (als äußere physische Nahteigenschaft) mit unterschiedlicher Schweißschuppenlänge NLi (als unterschiedliche Ausprägungen der äußeren physischen Schweißnahteigenschaft) zu erzeugen.

Jeder Schweißschuppenlänge NLi wird ein bestimmter Codebuchstabe eines bestimmten Codealphabets zugeordnet. Die gewünschte Information kann folglich dadurch in der Schweißnaht N gespeichert werden, indem entlang des Nahtverlaufs eine bestimmte, der Information entsprechende Abfolge von Schweißschuppen Si mit jeweils einer bestimmten Schweißschuppenlänge NLi (mit einem zugeordneten Codebuchstaben) erzeugt wird. In einer vorteilhaften Ausgestaltung der Erfindung wird die Informationen in Form eines maschinenlesbaren digitalen Codes gespeichert, sodass die Informationen mittels einer Ausleseeinheit 16 (Fig.2) aus der Sequenz der zumindest einen detektierbaren äußeren physischen Schweißnahteigenschaft entlang des Nahtverlaufs auslesbar ist. Als Ausleseeinheit kann z.B. ein berührungsloser Scanner oder ein Messtaster verwendet werden, wie anhand von Fig.2 noch näher erläutert wird. Als digitale Form der Speicherung kann dabei jede geeignete Art eines digitalen Codes verwendet werden, vorzugsweise ein mehrwertiger Code.

Bekannte mehrwertige Codes sind z.B. der Binärcode, dessen Codealphabet zwei verschiedenen Codebuchstaben bzw. Codesymbole enthält (üblicherweise 0/1 oder wahr/falsch). Die Information kann folglich als eine Sequenz der zwei Codebuchstaben gespeichert werden, wobei jeder Codebuchstabe wiederum in Form einer bestimmten detektierbaren äußeren physischen Schweißnahteigenschaft in der Schweißnaht N gespeichert wird. Ein weiterer bekannter mehrwertiger Code ist der Ternärcode, dessen Codealphabet aus drei verschiedenen Codebuchstaben bzw. Codesymbolen (üblicherweise 0/1/2 oder -1/0/1) besteht. Die Information kann folglich als eine Sequenz der drei Codebuchstaben gespeichert werden, wobei jeder Codebuchstabe wiederum in Form einer bestimmten detektierbaren äußeren physischen Schweißnahteigenschaft in der Schweißnaht N gespeichert wird.

Daneben gibt es auch noch weitere bekannte digitale Codes, die natürlich ebenfalls verwendet werden könnten, beispielsweise mehrwertige Codes mit mehr als drei Codebuchstaben, wie z.B. quaternär (vier Codebuchstaben), quinär (fünf Codebuchstaben), dezimal (zehn Codebuchstaben), hexadezimal (sechszehn Codebuchstaben), usw. Die Information könnte dann beispielsweise binär, ternär oder in einem anderen mehrwertigen Code gemäß dem ASCII-Code in der Schweißnaht N gespeichert sein. Auch ein proprietäres Informationsprotokoll, ähnlich einem Busprotokoll wäre beispielsweise möglich. Die Information könnte damit z.B. mit einem nicht veröffentlichten herstellerspezifischen Standard gespeichert werden und dadurch z.B. nur von befugten Personen ausgelesen werden.

Wie bereits beschrieben können als detektierbare äußere physische Schweißnahteigenschaft auch ein oder mehrere messbare Geometrieparameter der Schweißnaht N verwendet werden, wie z.B. eine Schweißnahtdicke ND, und/oder eine Schweißnahtbreite NB und/oder eine Schweißnahtlänge NL von Abschnitten der Schweißnaht N entlang des Nahtverlaufs und/oder oder eine Länge eines Bereichs B der Schweißnaht N ohne Zusatzstoff Z, beispielsweise bei einer durch Intervallschweißen hergestellten Schweißnaht N (Fig.2). Bei einer ununterbrochenen Schweißnaht N kann beispielsweise eine Schweißschuppenlänge NLi von Schweißschuppen Si verwendet werden, wie anhand der ersten Schweißnaht N1 in Fig.2 dargestellt ist. Diese äußeren physischen Schweißnahteigenschaften werden folglich entsprechend des verwendeten digitalen Codes durch Variieren des (oder der) Steuerungsparameter so in der Schweißnaht N erzeugt, dass zwischen dem Informationsstartpunkt ISP und dem Informationsendpunkt IEP im Nahtverlauf der Schweißnaht N eine der zu speichernden Information entsprechende Code-Sequenz gespeichert wird. Bei einem Binärcode könnte das z.B. dadurch erfolgen, dass zwei verschiedene Geometrieparameter verwendet werden, die jeweils einem Codebuchstaben entsprechen, wie nachfolgend anhand Fig.2 noch im Detail erläutert wird.

Wenn mehrere verschiedene messbare Geometrieparameter verwendet werden, um die Information in der Schweißnaht N zu speichern, kann z.B. jedem der Geometrieparameter ein Codebuchstabe eines mehrwertigen Codes zugeordnet werden. Auch eine Kombination von zwei oder mehreren messbaren Geometrieparametern könnte beispielsweise als ein Codebuchstabe des Codes verwendet werden. Bei einem binären Code können z.B. zwei verschiedene messbare Geometrieparameter verwendet werden und jedem Geometrieparameter wird ein Codebuchstabe zugeordnet. Bei einem ternären Code können drei verschiedene messbare Geometrieparameter verwendet werden, wobei jedem Geometrieparameter ein Codebuchstabe zugeordnet wird, usw. Das könnte bei einem ternären Code beispielsweise bedeuten, dass eine bestimmte Schweißnahtdicke ND von Abschnitten der Schweißnaht N (z.B. von Schweißschuppen) einem ersten Codebuchstaben zugeordnet wird, eine bestimmte Schweißnahtbreite NB einem zweiten Codebuchstaben und eine Schweißnahtlänge NL dem dritten Codebuchstaben des ternären Codes.

Wenn nur zwei messbare Geometrieparameter (z.B. Schweißnahtbreite NB und Schweißnahtlänge NL von Abschnitten der Schweißnaht N) für den ternären Code verwendet werden, könnte auch eine bestimmte Schweißnahtbreite NB einem ersten Codebuchstaben zugeordnet werden, eine bestimmte Schweißnahtlänge NL einem zweiten Codebuchstaben und eine bestimmte Kombination von einer bestimmten Schweißnahtbreite NB und einer bestimmten Schweißnahtlänge NL könnte dem jeweils dritten Codebuchstaben des ternären Codes zugeordnet werden. Natürlich könnte aber auch nur ein messbarer Geometrieparameter verwendet werden und bestimmte unterschiedliche Ausprägungen des Geometrieparameters könnten jeweils einem Codebuchstaben zugeordnet werden. Beispielsweise könnte lediglich die Schweißnahtdicke ND von Abschnitten der Schweißnaht N als messbarer Geometrieparameter verwendet werden und unterschiedliche festgelegte Werte der Schweißnahtdicke ND könnten jeweils einem Codebuchstaben zugeordnet sein. Daraus ist ersichtlich, dass es für die Speicherung der Information in der Schweißnaht N eine Vielzahl von Varianten gibt, aus denen der Fachmann eine geeignete Variante auswählen kann.

In vorteilhafter Weise kann das Verfahren dazu genutzt werden, um Verfahrensdaten zu den zur Erzeugung der Schweißnaht N verwendeten Steuerungsparametern in der Schweißnaht N zu speichern. Beispielsweise könnten die zur Erzeugung der Schweißnaht N verwendeten Schweißparameter in der Schweißnaht gespeichert werden. Dadurch könnte beispielsweise bei einer späteren Schweißnahtprüfung (die uU mehrere Monate nach der Erzeugung der Schweißnaht erfolgt) in einfacher Weise die in der Schweißnaht N gespeicherte Information ausgelesen werden. Damit kann nachvollzogen werden, welche Schweißparameter während des Schweißprozesses verwendet wurden, ohne dass eine andere Art der Dokumentation erforderlich ist. Die zu prüfende Person braucht lediglich optisch, haptisch oder vorzugsweise mittels einer geeigneten Ausleseeinheit 16 die gespeicherten Informationen aus der Schweißnaht auslesen. Natürlich kann die gleiche (oder eine andere) eine Information auch an mehreren Stellen einer Schweißnaht N gespeichert werden, z.B. in voneinander beabstandeten Bereichen der Schweißnaht N entlang des Nahtverlaufs. Das kann beispielsweise bei relativ langen Schweißnähten N vorteilhaft sein, um die Information an verschiedenen Stellen auslesen zu können oder um Informationen bestimmten Abschnitten einer Schweißnaht zuzuordnen.

Es müssen aber nicht zwangsläufig die Verfahrensdaten selbst in der Schweißnaht N gespeichert werden, sondern es könnte auch eine den Verfahrensdaten eindeutig zugeordnete Referenzinformation gespeichert werden, z.B. in Form einer den Verfahrensdaten eindeutig zugeordneten Referenznummer. Die Verfahrensdaten können dann aus der ausgelesenen Referenzinformation beispielsweise aus einer anderen Datenquelle ermittelt werden. Dies kann beispielsweise aufgrund der relativ großen zu erwartenden Datenmenge bei Einbringung der verwendeten Schweißparameter vorteilhaft sein, weil die Verfahrensdaten über die Schweißparameter nicht direkt in der Schweißnaht N gespeichert werden müssen, sondern lediglich die Referenzinformation. Mittels der Referenzinformation können die verwendeten Schweißparameter dann beispielsweise aus einer Datenquelle, wie z.B. einer Datenbank ausgelesen werden. Die Datenquelle könnte aber beispielsweise auch in der Vorrichtung 1 integriert sein, beispielsweise in der Speichereinheit der Schweißeinheit 2. Aus der ausgelesenen Referenzinformation könnten dann beispielsweise über eine Benutzerschnittstelle der Vorrichtung 1 (oder der Schweißeinheit 2), z.B. über einen Touchscreen, die der Referenzinformation zugeordneten Verfahrensdaten ausgelesen werden.

Beispielsweise wäre es denkbar, dass während des Auslesens der gespeicherten Information mittels einer geeigneten Ausleseeinheit 16 automatisch eine Verlinkung zur Datenquelle erfolgt. Die Datenquelle kann dabei z.B. in der Ausleseeinheit 16 integriert sein oder die Ausleseeinheit 16 könnte auch über eine geeignete Datenverbindung auf eine externe Datenquelle zugreifen. Dadurch muss nur eine relativ geringe Datenmenge (der Referenzinformation) in der Schweißnaht N gespeichert werden und die größere Datenmenge (der Verfahrensdaten) kann in einer anderen Datenquelle gespeichert sein. Beispielsweise könnte die Referenzinformation mittels eines Smartphones über die integrierte Kamera ausgelesen werden.

Eine geeignete Smartphone-App des Smartphones könnte bei Identifikation einer bestimmten Referenzinformation automatisch die Verfahrensdaten anzeigen, die der jeweiligen Referenzinformation zugeordnet sind. Die Verfahrensdaten können dabei beispielsweise direkt am Smartphone gespeichert sein, was beispielsweise bei einer autarken Anwendung vorteilhaft ist, bei der das Smartphone keine oder nur eine unzureichende Kommunikationsverbindung hat. Es könnte aber beispielsweise auch automatisch ein Abrufen der (der Referenzinformation zugeordneten) Verfahrensdaten über eine externe Datenquelle erfolgen, beispielsweise über eine drahtlose Kommunikationsverbindung des Smartphones. Auch eine Weiterleitung auf eine Webseite, wäre möglich, auf der die der Referenzinformation zugeordneten Verfahrensdaten ausgelesen werden können. Die Erzeugung der Referenzinformation, beispielsweise die Berechnung einer Referenznummer, könnte beispielsweise in der Steuerungseinheit 4, einer übergeordneten Steuerungseinheit 15 oder einer anderen Steuerungseinheit der Vorrichtung 1 erfolgen, z.B. der Schweiß-Steuerungseinheit der Schweißeinheit 2. Die Erzeugung der Referenzinformation könnte aber beispielsweise auch in einem externen Drittsystem erfolgen und in geeigneter Weise an die Vorrichtung 1 übermittelt werden. Das Drittsystem kann z.B. ein Dokumentations- oder Analysesystem sein.

Alternativ oder zusätzlich könnten in einer Schweißnaht N auch vom Schweißverfahren unabhängige externe Daten gespeichert werden. Das könnten beispielsweise Metadaten zum durchgeführten Schweißverfahren oder zur Schweißnaht N sein, wie z.B. Art des verwendeten Zusatzstoffs Z, Datum, Uhrzeit oder Dauer der Durchführung des Schweißverfahrens, Angaben zur Person, die das Schweißverfahren durchgeführt hat, Informationen über die Bauteile 5, sonstige produktionstechnische Informationen, etc. Natürlich könnten aber auch andere Daten gespeichert werden, die nicht unmittelbar in Zusammenhang mit der Schweißnaht N stehen, beispielsweise Informationen über einen Kunden, Informationen aus einer Bedienungsanleitung oder einem anderen Dokument.

Analog wie bei den Verfahrensdaten, könnte natürlich auch bei externen Daten lediglich eine Referenzinformation in der Schweißnaht N gespeichert werden. Die der Referenzinformation zugeordneten externen Daten könnten beispielsweise wiederum aus einer externen Datenquelle entnommen werden. Beispielsweise könnte anstatt der direkten Speicherung der Informationen aus der Bedienungsanleitung in der Schweißnaht N eine Referenzinformation als eine Art Verlinkung auf die jeweilige Stelle der Bedienungsanleitung gespeichert werden. Über eine geeignete Ausleseeinheit 16 könnte man über das Auslesen der Referenzinformation direkt an die entsprechende Stelle der Bedienungsanleitung weitergeleitet werden. Die Bedienungsanleitung könnte hierbei wiederum z.B. direkt in der Ausleseeinheit 16 lokal gespeichert sein oder in einer externen Datenquelle, auf die mittels der Ausleseeinheit 16 zugegriffen werden kann, beispielsweise über eine geeignete drahtlose Kommunikationsverbindung.

Die zu speichernden Informationen können beispielsweise in einer geeigneten, in der Steuerungseinheit 4 integrierten oder separaten Speichereinheit gespeichert werden, um von der Steuerungseinheit 4 verwendet werden zu können. Die Informationen können beispielsweise auch nach dem durchgeführten Schweißverfahren in der Speichereinheit gespeichert bleiben, z.B. in Form einer Log-Datei, sodass die Informationen auch später abrufbar oder zur Erzeugung einer weiteren Schweißnaht N wiederverwendbar sind. Beispielsweise könnte auch eine Benutzerschnittstelle in der Vorrichtung 1 vorgesehen sein, beispielsweise in Form eines Touchscreens, über welche die in der Speichereinheit gespeicherten Informationen auswählbar sind, die dann dazu verwendet werden, um in einer oder mehreren weiteren Schweißnähten N gespeichert zu werden.

Insbesondere, wenn die Informationen, die in der Schweißnaht N gespeichert werden sollen externe Daten beinhalten, ist es vorteilhaft, wenn die Daten vor der Durchführung des Schweißverfahrens an die Steuerungseinheit 4 übertragen werden. Das kann beispielsweise über eine geeignete Datenübertragungs-Schnittstelle an der Vorrichtung 1, beispielsweise direkt an der Steuerungseinheit 4 oder über eine allfällige übergeordnete Steuerungseinheit 15 erfolgen. Als Datenübertragungs-Schnittstelle kann jede beliebige geeignete Schnittstelle verwendet werden, beispielsweise eine drahtgebundene Schnittstelle wie Ethernet oder auch eine drahtlose Schnittstelle wie z.B. WLAN, Bluetooth oder NFC. Gleichfalls kann es vorteilhaft sein, wenn in der Vorrichtung eine Eingabeeinheit vorgesehen ist, über welche die Informationen an die Steuerungseinheit 4 eingegeben werden können. Beispielsweise könnte eine Benutzerschnittstelle wie z.B. ein Touchscreen, eine Tastatur, etc. vorgesehen sein, um die Informationen einzugeben. Über die Benutzerschnittstelle könnte die zu speichernde Information z.B. in Form von Zahlenwerten, Text, etc. eingegeben werden. Auch die Position entlang des Nahtverlaufs, an der die Information in der Schweißnaht N gespeichert werden soll, könnte beispielsweise über die Benutzerschnittstelle eingegeben werden. Denkbar wäre z.B., dass der Informationsstartpunkt ISP und der Informationsendpunkt IEP als Zeitpunkte im Schweißprozess festgelegt werden. Es könnte auch der Informationsstartpunkt ISP als Zeitpunkt festgelegt werden und eine bestimmte Zeitdauer vorgegeben werden, während der die Information in die Schweißnaht N eingebracht wird. Der Informationsendpunkt IEP ergibt sich dann automatisch.

In der Regel liegen die Informationen nicht in der Form vor, in der sie in der Schweißnaht N gespeichert werden, wie z.B. im binären, ternären oder einem anderen mehrwertigen Format. Es ist daher vorteilhaft, wenn die zu speichernden Information von der Steuerungseinheit 4 in die Form umgewandelt wird, in der sie in der Schweißnaht N gespeichert wird. Dazu kann z.B. eine geeignete Umwandlungseinheit in der Vorrichtung 1 vorgesehen sein, beispielsweise in der Steuerungseinheit 4 integriert oder auch als separate Einheit, die mit der Steuerungseinheit 4 kommuniziert. Dadurch kann beispielsweise eine gewünschte Information (z.B. numerisch, alphabetisch oder alphanumerisch) von der Umwandlungseinheit in den digitalen Code umgewandelt werden, in dem die Information schließlich in der Schweißnaht N durch einen oder mehrere detektierbare äußere physische Schweißnahteigenschaften gespeichert wird. Die gewünschte Information könnte z.B. über eine Benutzerschnittstelle (z.B. eine Tastatur oder Touchscreen) z.B. im ASCII-Format eingegeben werden und kann von der Umwandlungseinheit z.B. in den binären oder ternären Code umgewandelt werden. Im Zuge der Umwandlung (oder bereits davor) kann beispielsweise auch eine Komprimierung, Verschlüsselung, eine Berechnung einer Prüfsumme oder Signatur etc. erfolgen. Die in der Schweißnaht N zu speichernde Information könnte aber beispielsweise auch aus bereits in der Steuerungseinheit 4 bzw. der darin integrierten Speichereinheit gespeicherten Informationen ausgewählt werden. Beispielsweise könnten bestimmte wiederkehrende Bauteilnummern, Benutzer, Verfahrensdaten wie Schweißparameter, bestimmten Schweißprozessen zugeordnete Referenzinformationen, etc. schnell und einfach ausgewählt werden.

Im dargestellten Beispiel in Fig.1 ist die Schweißeinheit 2 zur Durchführung eines Lichtbogenschweißverfahrens mit abschmelzender Elektrode ausgebildet. Dabei dient der Zusatzstoff Z gleichzeitig auch als Elektrode, die in Form eines Schweißdrahts einer Schweißstelle zugeführt wird. Der Schweißdraht wird bekanntermaßen durch einen zwischen den zu verbindenden (zumindest teilweise metallischen) Bauteilen 5 und dem Schweißdraht brennenden elektrischen Lichtbogen abgeschmolzen, um die Schweißnaht N zu erzeugen. Oftmals wird dabei auch ein inertes oder aktives Schutzgas verwendet, das der Schweißstelle zugeführt wird, um die Schweißstelle zur Vermeidung von Oxidation von der Umgebung abzuschirmen. Man spricht dabei auch von Metall-Aktivgasschweißen (MAG), Metall-Inertgasschweißen (MIG) oder allgemein von Metall-Schutzgasschweißen (MSG). Da die Schweißverfahren und der grundsätzliche Aufbau einer Schweißeinheit 2 zur Durchführung der Schweißverfahren grundsätzlich bekannt ist, wird an dieser Stelle nicht im Detail darauf eingegangen.

Die Schweißeinheit 2 kann bekanntermaßen einen Schweißbrenner 6 aufweisen, dem über ein Schlauchpaket 10 der Zusatzstoff Z in Form eines Schweißdrahts von einer geeigneten Schweißdrahtzuführeinheit 8 zugeführt wird. Wenn ein Schutzgas verwendet wird, kann das Schutzgas z.B. von einem geeigneten Schutzgasbehälter 9 ebenfalls über das Schlauchpaket 10 dem Schweißbrenner 6 zugeführt werden. Die Schweißeinheit 2 weist weiters eine Schweißstromquelle 7 auf, welche die erforderliche Energie für das Schweißverfahren in Form eines elektrischen Schweißstroms bzw. einer elektrischen Schweißspannung bereitstellt. Zur Erzeugung des Lichtbogens wird ein Schweißstromkreis über die zu verschweißenden Bauteile 5 geschlossen. Dazu kann beispielsweise der Schweißbrenner 6 über eine erste elektrische Schweißleitung L mit der Schweißstromquelle 7 verbunden sein, z.B. wiederum über das Schlauchpaket 10, und das Werkstück (die zu verschweißenden Bauteile 5) kann mittels einer zweiten Schweißleitung, z.B. einer Masseleitung M, mit der Schweißstromquelle 7 verbunden sein.

Über die Steuerungseinheit 4 kann das Schweißverfahren gesteuert werden, indem bestimmte Schweißparameter eines bestimmten Schweißprozesses eingestellt bzw. eingeregelt werden, der mit der Schweißeinheit 2 durchgeführt wird. Bekannte Schweißprozesse eines MSG-Schweißverfahrens sind z.B. ein Impulsschweißprozess, ein Kurzlichtbogenschweißprozess, eine Sonderform des Kurzlichtbogenschweißprozesses wie z.B. der CMT-Schweißprozess, etc. Zu den Schweißparametern zählen beispielsweise ein elektrischer Schweißstrom, eine elektrische Schweißspannung, eine Drahtvorschubgeschwindigkeit des Schweißdrahts (oder allgemein des Zusatzstoffs Z), eine Impulsfrequenz des Schweißstroms, eine Anzahl von Schweißzyklen und/oder Dauer von Schweißzyklen, etc. Da die Schweißprozesse und deren Schweißparameter bekannt sind, erübrigt sich an dieser Stelle eine nähere Beschreibung.

Es könnte aber z.B. auch ein bekanntes Mehrfachschweißverfahren verwendet werden, bei dem der Schweißstelle (über einen oder mehrere Schweißbrenner) mehrere Schweißdrähte zugeführt werden. Dabei wird an jedem Schweißdraht ein separater Schweißprozess durchgeführt, wobei die Schweißdrähte jeweils mit einem Lichtbogen abgeschmolzen werden. Dabei können z.B. auch verschiedene Zusatzstoffe Z verwendet werden; die Schweißnaht N kann dann aus den verschiedenen Zusatzstoffen Z bestehen. Bei einem Mehrfachschweißverfahren kann als Schweißparameter z.B. auch eine zeitliche Phasenverschiebung zwischen dem Schweißstrom (und/oder der Schweißspannung) der beiden separaten Schweißprozesse verwendet werden. Natürlich ist dies aber nur beispielhaft zu verstehen und es könnte auch jedes andere Schweißverfahren verwendet werden, mit welchem eine, aus einem Zusatzstoff Z bestehende stoffschlüssige Schweißnaht N erzeugt werden kann. Bekannte geeignete Schweißverfahren sind z.B. ein Laserschweißverfahren oder ein Elektronenstrahlschweißverfahren. Auch kombinierte Schweißverfahren sind bekannt, wie z.B. Laser-Hybridschweißen, bei dem ein MSG-Schweißverfahren und ein Laserschweißverfahren kombiniert werden.

Die in die Schweißnaht N einzubringende Information könnte beispielsweise Verfahrensdaten über die verwendeten Schweißparameter enthalten, die zur Erzeugung der Schweißnaht N verwendet werden. Beispielsweise kann damit in der Schweißnaht N gespeichert werden, wie hoch der Schweißstrom und/oder die Schweißspannung war, die zur Erzeugung der Schweißnaht N verwendet wurden. Auch die Höhe der Vorschubgeschwindigkeit des Schweißzusatzes und/oder eine Impulsfrequenz des Schweißstroms könnten beispielsweise gespeichert werden. Auch Verfahrensdaten der Manipulationseinheit 3 können natürlich in der Schweißnaht gespeichert werden, beispielsweise eine Schweißgeschwindigkeit, mit der die Schweißeinheit 2 relativ zu den Bauteilen 5 bewegt wurde. Dadurch ist zu einem späteren Zeitpunkt feststellbar, mit welchen Einstellungen der Vorrichtung 1 die Schweißeinheit erzeugt wurde.

In Fig.2 sind mehrere Bauteile 5a-5d dargestellt, die durch das erfindungsgemäße Schweißverfahren mittels Schweißnähten N1-N3 verbunden wurden. Die Schweißnähte N1-N3 können beispielsweise mit der Vorrichtung gemäß Fig.1 erzeugt worden sein. Der Einfachheit halber weisen die Schweißnähte N1-N3 jeweils einen geraden Nahtverlauf auf, natürlich wären aber auch komplexere mehrdimensionale Nahtverläufe möglich. Das hängt im Wesentlichen von der Geometrie der zu verbindenden Bauteile 5 ab. In den Schweißnähten N1-N3 sind Informationen in digitaler Form mittels detektierbarer äußerer physischer Schweißnahteigenschaften gespeichert. Die erste Schweißnaht N1 ist als kontinuierliche, also durchgehende Schweißnaht N ausgebildet und kann z.B. mit einem Impulsschweißprozess oder einem anderen geeigneten Schweißprozess eines Lichtbogenschweißverfahrens oder auch mit einem anderen Schweißverfahren erzeugt werden. Die erste Schweißnaht N1 verbindet die Bauteile 5b und 5c stoffschlüssig miteinander.

Die Schweißnähte N2+N3 sind durch sogenanntes Intervallschweißen hergestellt. Die zweite Schweißnaht N2 verbindet die Bauteile 5a und 5b stoffschlüssig miteinander und die dritte Schweißnaht N3 verbindet die Bauteile 5c und 5d stoffschlüssig miteinander. Beim Intervallschweißen wird in der Regel keine durchgehende zusammenhängende Schweißnaht erzeugt, sondern es wird eine intermittierende, also unterbrochene Schweißnaht N erzeugt. Die Schweißnaht N besteht beim Intervallschweißen daher oftmals aus aufeinanderfolgenden Schweißpunkte Pi aus dem Zusatzstoff Z, die in Richtung des Nahtverlaufs jeweils durch einen Bereich B ohne Zusatzstoff voneinander getrennt sind. Aber auch beim Intervallschweißen wäre grundsätzlich die Erzeugung einer durchgehenden Schweißnaht N möglich. An dieser Stelle sei nochmals darauf hingewiesen, dass als Schweißnaht N im Rahmen der Erfindung nicht zwingend eine durchgehende, zusammenhängende Schweißnaht N zu verstehen ist, sondern dass auch intermittierenden Schweißnähte als Schweißnähte N im Sinne der Erfindung zu verstehen sind.

Bei der ersten Schweißnaht N1 dient eine Schweißnahtlänge NLi von Abschnitten der Schweißnaht N1 als detektierbare äußere physische Schweißnahteigenschaft, mit der die Information in der Schweißnaht N1 gespeichert ist. Unter der Schweißnahtlänge NLi ist allgemein eine Länge von unterscheidbaren Abschnitten einer Schweißnaht N in Richtung des Nahtverlaufs zu verstehen. Im konkreten Fall weist die dargestellte Schweißnaht N1 aufeinanderfolgende Schweißschuppen Si auf, die sich aufgrund der Prozessführung des verwendeten Schweißprozesses ergeben. Die Gestalt der Schweißschuppen Si und insbesondere die Schweißschuppenlänge NLi der Schweißschuppen Si kann von einem oder mehreren Steuerungsparametern des Schweißverfahrens beeinflusst werden, insbesondere von der Schweißgeschwindigkeit, mit der der Schweißbrenner 6 von der Manipulationseinheit 3 relativ zu den Bauteilen 5b, 5c bewegt wird, von der Vorschubgeschwindigkeit des Zusatzstoffs Z und insbesondere auch von Schweißparametern wie z.B. dem Schweißstrom, der Impulsfrequenz (bei zyklisch pulsierendem Schweißstrom), der Anzahl der Schweißzyklen und/oder der Dauer der Schweißzyklen, etc. Wie die Schweißschuppenlänge NLi beeinflusst werden kann ist aber grundsätzlich bekannt, weshalb hier nicht im Detail darauf eingegangen wird.

Die Schweißschuppenlänge NLi kann folglich dazu verwendet werden, die gewünschten Informationen in digitaler Form in der ersten Schweißnaht N1 zu speichern. Je nachdem, welcher digitale Code verwendet wird, können verschiedene Schweißschuppenlängen NLi den Codebuchstaben des Codealphabets des Codes zugeordnet werden. Bei einem Binärcode können z.B. zwei verschiedene Schweißschuppenlängen NL1, NL2 verwendet werden, die entsprechend des Informationsgehalts in einer bestimmten Sequenz entlang des Nahtverlaufs in die Schweißnaht N1 eingebracht werden, wie in Fig.2 angedeutet ist. Eine Schweißschuppenlänge NL1, NL2 kann beispielsweise als Codebuchstabe bzw. Codesymbol "logisch Null" des binären Codes interpretiert werden und die jeweils andere Schweißschuppenlänge NL1, NL2 kann als Codebuchstabe bzw. Codesymbol "logisch Eins" des binären Codes interpretiert werden. Die Information ist zwischen einem festgelegten Informationsstartpunkt ISP1 und einem festgelegten Informationsendpunkt IEP1 in der Schweißnaht N1 gespeichert. Im dargestellten Beispiel entspricht der Informationsstartpunkt ISP1 dem Nahtbeginn der Schweißnaht N1 und der Informationsendpunkt IEP1 entspricht dem Nahtende der Schweißnaht N1. Natürlich ist dies aber nur beispielhaft und der Informationsstartpunkt ISP1 und der Informationsendpunkt IEP1 könnten sich auch an einer anderen Stelle der Schweißnaht N1 befinden, beispielsweise in einem vorgegebenen zentralen Abschnitt der Schweißnaht N1. Auch ein wiederholtes Einbringen der gleichen (oder einer anderen Information) Information an verschiedenen Stellen der Schweißnaht N1 entlang des Nahtverlaufs wäre natürlich denkbar.

Wie erwähnt könnten natürlich auch mehrere verschiedene detektierbare äußere physische Schweißnahteigenschaften verwendet werden, um die Information zu speichern. Beispielsweise könnten bei der dargestellten ersten Schweißnaht N1 einer bestimmten Schweißschuppenlänge NLi der Schweißschuppen Si ein erster Codebuchstabe des binären Codes zugeordnet werden und einer bestimmten Schweißschuppenbreite NBi der Schweißschuppen Si könnte der jeweils zweite Codebuchstabe des binären Codes zugeordnet werden. Die Information ergibt sich dann aus einer Sequenz von Schweißschuppenlänge NLi und Schweißschuppenbreite NBi entlang des Nahtverlaufs. Bei höherwertigen Codes (z.B. ternär, quatär, quintär, etc.) können die weiteren Codebuchstaben entsprechend jeweils einer weiteren detektierbaren äußere physischen Schweißnahteigenschaft zugeordnet werden. Beispielsweise könnte zusätzlich eine bestimmte Schweißnahtdicke NDi der Schweißschuppen Si als dritter Codebuchstabe eines ternären Codes verwendet werden. Auch verschiedene Ausprägungen einer detektierbaren äußeren physischen Schweißnahteigenschaft wie z.B. unterschiedliche Werte der Schweißnahtdicke NDi, können natürlich jeweils einem Codebuchstaben zugeordnet werden.

Die zweite Schweißnaht N2 ist eine durch Intervallschweißen hergestellte Schweißnaht, die mehrere Schweißpunkte P1 bestimmter Größe bestehend aus dem Zusatzstoff Z aufweist, die jeweils durch einen Bereich B ohne Zusatzstoff Z voneinander getrennt sind. Die Informationen sind wiederum zwischen einem festgelegten Informationsstartpunkt ISP2 und einem festgelegten Informationsendpunkt IEP2 in der Schweißnaht N2 gespeichert. Die Information ist hier im binären Code in der Schweißnaht N2 gespeichert. Als detektierbare äußere physische Schweißnahteigenschaften zum Speichern der Information dienen hier die Schweißpunkte P1 und die dazwischenliegenden Bereiche B. Die Schweißpunkte P1 weisen (zumindest im Bereich zwischen dem Informationsstartpunkt ISP2 und dem Informationsendpunkt IEP2) vorzugsweise die gleiche Größe auf. Die Schweißpunkte P1 können als "logisch Null" des binären Codes interpretiert werden kann und die Bereiche B zwischen den Schweißpunkten P1 als "logisch Eins" (oder umgekehrt). Die gespeicherte Information ergibt sich folglich aus der Sequenz der Scheißpunkte P1 und der Bereiche B entlang des Nahtverlaufs zwischen dem Informationsstartpunkt ISP2 und dem Informationsendpunkt IEP2.

Die dritte Schweißnaht N3 ist ebenfalls eine durch Intervallschweißen hergestellte Schweißnaht N. Im Unterschied zur zweiten Schweißnaht N2 weist die dritte Schweißnaht N3 Schweißpunkte P1, P2 unterschiedlicher Größe auf, die jeweils durch einen Bereich B ohne Zusatzstoff Z voneinander getrennt sind. Die Information ist wiederum zwischen einem festgelegten Informationsstartpunkt ISP3 und einem festgelegten Informationsendpunkt IEP3 in der Schweißnaht N3 gespeichert. Die Information ist hier im ternären digitalen Format gespeichert. Als detektierbare äußere physische Schweißnahteigenschaften zum Speichern der Information dienen hier die ersten Schweißpunkte P1 einer festgelegten ersten Größe, die zweiten Schweißpunkte P2 einer festgelegten zweiten Größe sowie die dazwischenliegenden Bereiche B. Z.B. kann jeweils ein zweiter Schweißpunkt P2 als Codebuchstabe bzw. Codesymbol "logisch Zwei" (oder logisch -1") des ternären Codes interpretiert werden kann, jeweils ein erster Schweißpunkt P1 als Codebuchstabe bzw. Codesymbol "logisch Eins" und die Bereiche B zwischen den Schweißpunkten P1, P2 jeweils als Codebuchstabe bzw. Codesymbol "logisch Null". Natürlich wäre auch eine andere Zuordnung möglich. Die gespeicherte Information ergibt sich folglich aus der Sequenz der Scheißpunkte P1, P2 und der dazwischenliegenden Bereiche B entlang des Nahtverlaufs zwischen dem Informationsstartpunkt ISP3 und dem Informationsendpunkt IEP3.

Natürlich sind die dargestellten Ausführungsformen nur beispielhaft zu verstehen und es könnten auch beliebige andere geeignete detektierbare äußere physische Schweißnahteigenschaften verwendet werden, um die Information zu speichern. Beispielsweise könnten messbare Geometrieparameter einer Schweißnaht N verwendet werden, wie z.B. eine Schweißnahtdicke ND, eine Schweißnahtbreite NB von Abschnitten der Schweißnaht N. Für den Fall, dass der Informationsstartpunkt ISP nicht dem Beginn einer Schweißnaht N entspricht und der Informationsendpunkt IEP nicht dem Ende einer Schweißnaht N entspricht, kann es vorteilhaft sein, wenn der Informationsstartpunkt ISP und der Informationsendpunkt IEP in einer geeigneten Weise gekennzeichnet werden, sodass eine Person ohne großen Aufwand den Bereich der Schweißnaht erkennen kann, in welchem die Informationen gespeichert sind. Das könnte bei der dargestellten ersten Schweißnaht N1 beispielsweise dadurch erreicht werden, dass außerhalb des Bereichs, in dem die Informationen gespeichert sind, also entlang des Nahtverlaufs vor dem der Informationsstartpunkt ISP und nach dem Informationsendpunkt IEP, eine regelmäßige Anordnung der Schweißschuppen Si gleicher Schweißschuppenlänge NLi vorgesehen wird. Dadurch unterscheiden sich der Bereich ohne Information und der Bereich, in dem die Informationen gespeichert optisch, sodass der Informationsstartpunkt ISP und der Informationsendpunkt IEP identifiziert werden können.

Wie eingangs erwähnt könnte die Information im einfachsten Fall grundsätzlich auch durch optische Sichtprüfung oder durch Berührung ausgelesen werden. Dazu ist jedoch Kenntnis über den Code nötig, in der die Information gespeichert ist, was unter Umständen nicht immer der Fall ist und zudem sehr aufwändig und komplex ist. Es ist daher vorteilhaft, wenn die Information in maschinenlesbarer Form gespeichert ist, sodass diese mit einer geeigneten Ausleseeinheit 16 ausgelesen werden kann, um vorzugsweise auf einer geeigneten Anzeigeeinheit 17 dargestellt zu werden. Mit der Ausleseeinheit 16 kann eine Schweißnaht N zwischen dem jeweiligen Informationsstartpunkt ISP und dem Informationsendpunkt IEP abgetastet werden, was entweder manuell oder automatisiert erfolgen kann. Die Ausleseeinheit 16 erkennt die gespeicherte Information anhand der detektierbaren äußeren physischen Schweißnahteigenschaften und kann die Information z.B. an eine geeignete Anzeigeeinheit 17 übermittelt, auf der die Informationen dargestellt wird und von einer Person abgelesen werden kann. Denkbar wäre z.B., dass ein Handscanner in der Art eines Barcode-Scanners verwendet wird, ein aus der Fertigungstechnik bekannter taktiler Messtaster oder eine Kamera.

Im dargestellten Beispiel ist die Ausleseeinheit 16 als Kamera ausgebildet und die Schweißnaht N3 (oder zumindest der Bereich zwischen dem Informationsstartpunkt ISP und dem Informationsendpunkt IEP) befindet sich im Aufnahmebereich X der Kamera, wie in Fig.2 gestrichelt angedeutet ist. Über eine geeignete Bilderkennungs-Software, die z.B. direkt in der Kamera oder der Auswerteeinheit 17 integriert sein kann, kann die gespeicherte Information aus dem aufgenommenen Bild der Schweißnaht N gewonnen werden. Beispielsweise könnte in vorteilhafter Weise ein tragbarer Computer mit integrierter Kamera, wie z.B. ein Smartphone verwendet werden, der sowohl als Ausleseeinheit 16, als auch als Anzeigeeinheit 17 dient. Dadurch kann die Information in einfacher Weise auch an schlecht zugänglichen Orten ausgelesen werden. In ähnlicher Weise könnte auch ein bekannter taktiler Messtaster als Ausleseeinheit 16 verwendet werden, der z.B. dazu ausgebildet sein kann, einen Geometrieparameter wie z.B. die Schweißnahtdicke ND oder die Schweißnahtbreite NB als detektierbare äußere physische Schweißnahteigenschaft zu erfassen und an eine Auswerteeinheit 17 zu übermittelt. Die Auswerteeinheit 17 kann aus den erfassten Größen, z.B. aus einer Sequenz von Werten der Schweißnahtbreite NB oder Schweißnahtdicke ND entlang des Nahtverlaufs die gespeicherte Information auslesen.

Neben einer Schweißnaht N, mit der zwei oder mehrere Bauteile 5 stoffschlüssig verbunden werden, könnten z.B. auch eine oder mehrere (nicht dargestellte) Markierungsschweißnähte auf einem oder mehreren Bauteilen 5 erzeugt werden, die nicht der stoffschlüssigen Verbindung dienen. Solche Markierungsnähte können z.B. durch das bekannte Auftragsschweißen hergestellt werden. Auch in solchen Markierungsnähten kann natürlich mit dem erfindungsgemäßen Verfahren eine Information gespeichert werden. Dazu kann in analoger Weise wie anhand der Erzeugung der Schweißnaht N beschrieben wurde in dem zumindest einen Steuerungsparameter eine Information berücksichtigt werden, die während der Erzeugung der Markierungsschweißnaht zwischen einem Informationsstartpunkt und einem Informationsendpunkt im Nahtverlauf der Markierungsschweißnaht mittels der zumindest einen detektierbaren äußeren physischen Schweißnahteigenschaft in der Markierungsschweißnaht gespeichert wird. Die Information wird dabei derart gespeichert, dass die Information aus einer Sequenz der zumindest einen detektierbaren äußeren physischen Schweißnahteigenschaft entlang des Nahtverlaufs der Markierungsschweißnaht im Bereich zwischen dem Informationsstartpunkt und dem Informationsendpunkt, vorzugsweise optisch und/oder haptisch, auslesbar ist.

Eine Schweißnaht N, mit der zwei oder mehrere Bauteile 5 stoffschlüssig verbunden werden, könnte beispielsweise aber auch Markierungsnahtabschnitte aufweisen, die nicht der stoffschlüssigen Verbindung, sondern lediglich der Markierung dienen. Auch in solchen Markierungsnahtabschnitten ist eine Speicherung von Information natürlich möglich. Dazu kann wiederum in dem zumindest einen Steuerungsparameter eine Information berücksichtigt werden, die während der Erzeugung des Markierungsnahtabschnitts der Schweißnaht N zwischen einem Informationsstartpunkt und einem Informationsendpunkt im Nahtverlauf des Markierungsnahtabschnitts mittels der zumindest einen detektierbaren äußeren physischen Schweißnahteigenschaft in der Schweißnaht N gespeichert wird. Die Information kann dann wiederum aus einer Sequenz der zumindest einen detektierbaren äußeren physischen Schweißnahteigenschaft entlang des Nahtverlaufs im Bereich zwischen dem Informationsstartpunkt und dem Informationsendpunkt des Markierungsnahtabschnitts, vorzugsweise optisch und/oder haptisch, ausgelesen werden.

## Patentansprüche

1. Schweißverfahren zum stoffschlüssigen Verbinden von zumindest zwei Bauteilen (5) mittels zumindest eines Zusatzstoffs (Z), wobei eine aus dem Zusatzstoff (Z) bestehende Schweißnaht (N) mit einem vorgegebenen Nahtverlauf zwischen einem Nahtbeginn und einem Nahtende erzeugt wird, wobei die Erzeugung der Schweißnaht (N) mittels zumindest einer Steuerungseinheit (4) gesteuert wird, wobei durch zumindest einen Steuerungsparameter der Steuerungseinheit (4) zumindest eine detektierbare äußere physische Schweißnahteigenschaft der Schweißnaht (N) beeinflusst wird, **dadurch gekennzeichnet, dass** in dem zumindest einen Steuerungsparameter eine Information berücksichtigt wird, die während der Erzeugung der Schweißnaht (N) zwischen einem Informationsstartpunkt (ISP) und einem Informationsendpunkt (IEP) im Nahtverlauf mittels der zumindest einen detektierbaren äußeren physischen Schweißnahteigenschaft in der Schweißnaht (N) gespeichert wird, sodass die Information aus einer Sequenz der zumindest einen detektierbaren äußeren physischen Schweißnahteigenschaft entlang des Nahtverlaufs im Bereich zwischen dem Informationsstartpunkt (ISP) und dem Informationsendpunkt (IEP), vorzugsweise optisch und/oder haptisch, auslesbar ist, wobei während der Erzeugung der Schweißnaht (N) der zumindest eine Steuerungsparameter variiert wird, um im Nahtverlauf zwischen dem Informationsstartpunkt (ISP) und dem Informationsendpunkt (IEP) die zumindest eine detektierbare äußere physische Schweißnahteigenschaft zu verändern, wobei unterschiedliche Ausprägungen der zumindest einen äußeren physischen Schweißnahteigenschaft Codebuchstaben eines Codealphabets zugeordnet werden und die Information als Kombination der Codebuchstaben des Codealphabets gespeichert wird.

2. Schweißverfahren nach Anspruch 1, **dadurch gekennzeichnet, dass** die Information in Form eines maschinenlesbaren digitalen Codes gespeichert wird, sodass die Information mittels einer Ausleseeinheit (16) aus der Sequenz der zumindest einen detektierbaren äußeren physischen Schweißnahteigenschaft auslesbar ist, vorzugsweise mittels eines berührungslosen Scanners, zumindest einer Kamera oder eines Messtasters, wobei als digitaler Code vorzugsweise ein mehrwertiger Code, besonders bevorzugt ein Binärcode oder Ternärcode verwendet wird.

3. Schweißverfahren nach Anspruch 1 oder 2, **dadurch gekennzeichnet, dass** als die zumindest eine detektierbare äußere physische Schweißnahteigenschaft ein messbarer Geometrieparameter der Schweißnaht (N) verwendet wird, vorzugsweise eine Schweißnahtdicke (ND), eine Schweißnahtbreite (NB), eine Schweißnahtlänge (NL) von Abschnitten der Schweißnaht (N), insbesondere eine Schweißschuppenlänge (NL1, NL2) von Schweißschuppen (S1, S2) oder eine Länge eines Bereichs (B) der Schweißnaht (N) ohne Zusatzstoff (Z).

4. Schweißverfahren nach einem der Ansprüche 1 bis 3, **dadurch gekennzeichnet, dass** die Information Verfahrensdaten zu den verwendeten Steuerungsparametern des Schweißverfahrens beinhaltet, die zur Erzeugung der Schweißnaht (N) verwendet werden oder eine den Verfahrensdaten zugeordnete Referenzinformation und/oder dass die Information vom Schweißverfahren unabhängige externe Daten beinhaltet oder eine den externen Daten zugeordnete Referenzinformation.

5. Schweißverfahren nach Anspruch 4, **dadurch gekennzeichnet, dass** die Verfahrensdaten Daten über verwendete Schweißparameter beinhalten, die zur Erzeugung der Schweißnaht (N) verwendet werden, vorzugsweise Daten über einen Schweißstrom und/oder eine Schweißspannung und/oder eine Vorschubgeschwindigkeit des Zusatzstoffs (Z) und/oder eine Impulsfrequenz eines Schweißstroms und/oder eine Anzahl von Schweißzyklen und/oder eine Dauer von Schweißzyklen.

6. Schweißverfahren nach einem der Ansprüche 1 bis 5, **dadurch gekennzeichnet, dass** die Information in der Steuerungseinheit (4) gespeichert wird und/oder dass die Information vor der Durchführung des Schweißverfahrens an die Steuerungseinheit (4) übertragen wird und/oder dass die Information mittels einer Eingabeeinheit an die Steuerungseinheit (4) übermittelt wird und/oder dass die Information von der Steuerungseinheit (4) in einen digitalen Code umgewandelt wird.

7. Schweißverfahren nach einem der Ansprüche 1 bis 6, **dadurch gekennzeichnet, dass** als Schweißverfahren ein Lichtbogenschweißverfahren mit abschmelzender oder nicht-abschmelzender Elektrode, ein Laserschweißverfahren oder ein Elektronenstrahlschweißverfahren verwendet wird.

8. Schweißverfahren nach einem der Ansprüche 1 bis 7, **dadurch gekennzeichnet, dass** auf zumindest einem der Bauteile (5) durch Auftragsschweißen eine Markierungsschweißnaht erzeugt wird, wobei in dem zumindest einen Steuerungsparameter eine Information berücksichtigt wird, die während der Erzeugung der Markierungsschweißnaht zwischen einem Informationsstartpunkt und einem Informationsendpunkt im Nahtverlauf mittels der zumindest einen detektierbaren äußeren physischen Schweißnahteigenschaft in der Markierungsschweißnaht gespeichert wird, sodass die Information aus einer Sequenz der zumindest einen detektierbaren äußeren physischen Schweißnahteigenschaft entlang des Nahtverlaufs im Bereich zwischen dem Informationsstartpunkt und dem Informationsendpunkt, vorzugsweise optisch und/oder haptisch, auslesbar ist.

9. Schweißverfahren nach einem der Ansprüche 1 bis 8, **dadurch gekennzeichnet, dass** in der Schweißnaht (N) ein, nicht der stoffschlüssigen Verbindung dienender Markierungsnahtabschnitt vorgesehen wird, wobei in dem zumindest einen Steuerungsparameter eine Information berücksichtigt wird, die während der Erzeugung des Markierungsnahtabschnitts der Schweißnaht (N) zwischen einem Informationsstartpunkt und einem Informationsendpunkt im Nahtverlauf des Markierungsnahtabschnitts mittels der zumindest einen detektierbaren äußeren physischen Schweißnahteigenschaft in der Schweißnaht (N) gespeichert wird, sodass die Information aus einer Sequenz der zumindest einen detektierbaren äußeren physischen Schweißnahteigenschaft entlang des Nahtverlaufs im Bereich zwischen dem Informationsstartpunkt und dem Informationsendpunkt, vorzugsweise optisch und/oder haptisch, auslesbar ist.

## Claims

1. A welding method for materially cohesively bonding at least two components (5) using at least one additive material (Z), wherein a welding seam (N) consisting of the additive material (Z) is produced with a specified seam course between a seam start and a seam end, wherein the process of producing the welding seam (N) is controlled by least one control unit (4), wherein at least one detectable external physical welding seam property of the welding seam (N) is influenced by at least one control parameter of the control unit (4), **characterized in that** an information is included in the at least one control parameter, said information being stored in the welding seam (N) between an information start point (ISP) and an information end point (IEP) in the seam course during the process of producing the welding seam (N) using the at least one detectable external physical welding seam property, so that the information can be read, preferably optically and/or haptically, from a sequence of the at least one detectable external physical welding seam property along the seam course in the region between the information start point (ISP) and the information end point (IEP), wherein during the process of producing the welding seam (N), the at least one control parameter is varied to change the at least one detectable external physical welding seam property in the seam course between the information start point (ISP) and the information end point (IEP), wherein different forms of the at least one external physical welding seam property are assigned to code letters of a code alphabet and the information is stored as a combination of the code letters of the code alphabet.

2. The welding method according to claim 1, **characterized in that** the information is stored in the form of a machine-readable digital code, so that the information can be read by means of a readout unit (16) from the sequence of the at least one detectable external physical welding seam property, preferably by means of a contactless scanner, at least one camera or a measuring probe, wherein a multi-value code, particularly preferably a binary code or a ternary code, is preferably used as the digital code.

3. The welding method according to claim 1 or 2, **characterized in that** a measurable geometry parameter of the welding seam (N) is used as the at least one detectable external physical welding seam property, preferably a welding seam thickness (ND), a welding seam width (NB), a welding seam length (NL) of sections of the welding seam (N), in particular a welding scale length (NL1, NL2) of welding scales (S1, S2) or a length of a region (B) of the welding seam (N) without additive material (Z).

4. The welding method according to any of claims 1 to 3, **characterized in that** the information includes method data relating to the control parameters used of the welding method, which method data is used to produce the welding seam (N) or reference information assigned to the method data and/or that the information contains external data independent of the welding method or reference information assigned to the external data.

5. The welding method according to claim 4, **characterized in that** the method data includes data on welding parameters used, which data is used to produce the welding seam (N), preferably data on a welding current and/or a welding voltage and/or a feed rate of the additive material (Z) and/or a pulse frequency of a welding current and/or a number of welding cycles and/or a duration of welding cycles.

6. The welding method according to any of claims 1 to 5, **characterized in that** the information is stored in the control unit (4) and/or that the information is transmitted to the control unit (4) before the welding method is carried out and/or that the information is transmitted by means of an input unit to the control unit (4) and/or that the information is converted to a digital code by the control unit (4).

7. The welding method according to any of claims 1 to 6, **characterized in that** an arc welding method with a consumable or non-consumable electrode, a laser welding method or an electron beam welding method is used as the welding method.

8. The welding method according to any of claims 1 to 7, **characterized in that** a marking welding seam is produced on at least one of the components (5) by build-up welding, wherein information is included in the at least one control parameter, said information being stored in the marking welding seam between an information start point and an information end point in the seam course of the seam during the process of producing the marking welding seam using the at least one detectable external physical welding seam property, so that the information can be read, preferably optically and/or haptically, from a sequence of the at least one detectable external physical welding seam property along the seam course of the seam in the region between the information start point and the information end point.

9. The welding method according to any of claims 1 to 8, **characterized in that** a marking seam section not used for the materially cohesively bonding is provided in the welding seam (N), wherein information is included in the at least one control parameter, said information being stored in the welding seam (N) between an information start point and an information end point in the seam course of the marking seam section during the process of producing the marking seam section of the welding seam (N) using the at least one detectable external physical welding seam property, so that the information can be read, preferably optically and/or haptically, from a sequence of the at least one detectable external physical welding seam property along the seam course of the seam in the region between the information start point and the information end point.

## Revendications

1. Procédé de soudage permettant de relier par liaison de matière au moins deux pièces (5) au moyen d'au moins un additif (Z), un joint de soudure (N) constitué de l'additif (Z) étant produit avec une allure de joint prédéfinie entre un début de joint et une fin de joint, la production du joint de soudure (N) étant commandée au moyen d'au moins une unité de commande (4), au moins une propriété de joint de soudure physique extérieure pouvant être détectée du joint de soudure (N) étant influencée par au moins un paramètre de commande de l'unité de commande (4), **caractérisé en ce que,** dans l'au moins un paramètre de commande, une information est prise en compte, laquelle, pendant la production du joint de soudure (N), est enregistrée dans le joint de soudure (N) entre un point de départ d'information (ISP) et un point final d'information (IEP) dans l'allure de joint au moyen de l'au moins une propriété de joint de soudure physique extérieure pouvant être détectée, de sorte que l'information peut être lue, de préférence de manière optique et/ou haptique, à partir d'une séquence de l'au moins une propriété de joint de soudure physique extérieure pouvant être détectée le long de l'allure de joint dans la région entre le point de départ d'information (ISP) et le point final d'information (IEP), l'au moins un paramètre de commande étant modifié pendant la production du joint de soudure (N), afin de changer l'au moins une propriété de joint de soudure physique extérieure pouvant être détectée dans l'allure de joint entre le point de départ d'information (ISP) et le point final d'information (IEP), différentes formes de l'au moins une propriété de joint de soudure physique extérieure étant associées à des lettres de code d'un alphabet de code et l'information étant enregistrée sous forme de combinaison des lettres de code de l'alphabet de code.

2. Procédé de soudage selon la revendication 1, **caractérisé en ce que** l'information est enregistrée sous la forme d'un code numérique lisible par machine, de sorte que l'information peut être lue au moyen d'une unité de lecture (16) à partir de la séquence de l'au moins une propriété de joint de soudure physique extérieure pouvant être détectée, de préférence au moyen d'un scanner sans contact, d'au moins d'une caméra ou d'un palpeur de mesure, de préférence un code plurivalent, de manière particulièrement préférée un code binaire ou un code ternaire, étant utilisé comme code numérique.

3. Procédé de soudage selon la revendication 1 ou 2,
**caractérisé en ce qu'un** paramètre géométrique mesurable du joint de soudure (N) est utilisé comme l'au moins une propriété de joint de soudure physique extérieure pouvant être détectée, de préférence une épaisseur de joint de soudure (ND), une largeur de joint de soudure (NB), une longueur de joint de soudure (NL) de sections du joint de soudure (N), en particulier une longueur d'écaille de soudure (NL1, NL2) d'écailles de soudure (S1, S2) ou une longueur d'une région (B) du joint de soudure (N) sans additif (Z).

4. Procédé de soudage selon l'une des revendications 1 à 3,
**caractérisé en ce que** l'information contient des données de procédé concernant les paramètres de commande utilisés du procédé de soudage, lesquelles sont utilisées pour la production du joint de soudure (N), ou une information de référence associée aux données de procédé, **et/ou en ce que** l'information contient des données externes indépendantes du procédé de soudage ou une information de référence associée aux données externes.

5. Procédé de soudage selon la revendication 4, **caractérisé en ce que** les données de procédé contiennent des données concernant des paramètres de soudage utilisés, lesquelles sont utilisées pour la production du joint de soudure (N), de préférence des données concernant un courant de soudage et/ou une tension de soudage et/ou une vitesse d'avancement de l'additif (Z) et/ou une fréquence d'impulsions d'un courant de soudage et/ou un certain nombre de cycles de soudage et/ou une durée de cycles de soudage.

6. Procédé de soudage selon l'une des revendications 1 à 5,
**caractérisé en ce que** l'information est enregistrée dans l'unité de commande (4) **et/ou en ce que** l'information est transmise à l'unité de commande (4) avant la mise en oeuvre du procédé de soudage **et/ou en ce que** l'information est transmise à l'unité de commande (4) au moyen d'une unité d'entrée **et/ou en ce que** l'information est convertie en un code numérique par l'unité de commande (4).

7. Procédé de soudage selon l'une des revendications 1 à 6,
**caractérisé en ce qu'**un procédé de soudage à l'arc à l'aide d'une électrode fusible ou non fusible, un procédé de soudage au laser ou un procédé de soudage par faisceau d'électrons est utilisé comme procédé de soudage.

8. Procédé de soudage selon l'une des revendications 1 à 7,
**caractérisé en ce qu'**un joint de soudure de marquage est produit sur au moins l'une des pièces (5) par rechargement, une information étant prise en compte dans l'au moins un paramètre de commande, laquelle, pendant la production du joint de soudure de marquage, est enregistrée dans le joint de soudure de marquage entre un point de départ d'information et un point final d'information dans l'allure de joint au moyen de l'au moins une propriété de joint de soudure physique extérieure pouvant être détectée, de sorte que l'information peut être lue, de préférence de manière optique et/ou haptique, à partir d'une séquence de l'au moins une propriété de joint de soudure physique extérieure pouvant être détectée le long de l'allure de joint dans la région entre le point de départ d'information et le point final d'information.

9. Procédé de soudage selon l'une des revendications 1 à 8,
**caractérisé en ce qu'**une section de joint de marquage ne servant pas à la liaison de matière est prévue dans le joint de soudure (N), une information étant prise en compte dans l'au moins un paramètre de commande, laquelle, pendant la production de la section de joint de marquage du joint de soudure (N), est enregistrée dans le joint de soudure (N) entre un point de départ d'information et un point final d'information dans l'allure de joint de la section de joint de marquage au moyen de l'au moins une propriété de joint de soudure physique extérieure pouvant être détectée, de sorte que l'information peut être lue, de préférence de manière optique et/ou haptique, à partir d'une séquence de l'au moins une propriété de joint de soudure physique extérieure pouvant être détectée le long de l'allure de joint dans la région entre le point de départ d'information et le point final d'information.
